# EUROPÄISCHE PATENTSCHRIFT

(11) **EP 2 655 848 B1**
(45) Veröffentlichungstag und Bekanntmachung des Hinweises auf die Patenterteilung: **22.10.2014**
(21) Anmeldenummer: 11779178.0
(22) Anmeldetag: 04.11.2011
(51) Int. Cl.: F02M 37/00, F02M 21/02, F02M 55/02

(54) **BRENNSTOFFZUTEILER**
FUEL DISTRIBUTOR
DISTRIBUTEUR DE CARBURANT

(30) Priorität: 23.12.2010 DE 102010064121
(43) Veröffentlichungstag der Anmeldung: 30.10.2013
(73) Patentinhaber: Robert Bosch GmbH, 70442 Stuttgart (DE)
(72) Erfinder: GOEHNER, Martin, 71665 Vaihingen (DE); KAFKA, Jan, 37005 Ceske Budejovice (CZ)
(86) Internationale Anmeldenummer: PCT/EP2011/069424
(87) Internationale Veröffentlichungsnummer: WO 2012/084324

(56) Entgegenhaltungen:
- WO-A1-2006/122975
- WO-A1-2010/049966
- US-A- 5 832 905

## Beschreibung

### Stand der Technik

Die Erfindung betrifft einen Brennstoffzuteiler, der insbesondere zum Verteilen von Erdgas auf Brennstoffeinspritzventile dient. Speziell betrifft die Erfindung einen Brennstoffzuteiler für Brennstoffeinspritzanlagen von gemischverdichtenden, fremdgezündeten Brennkraftmaschinen.

Eine gemischverdichtende, fremdgezündete Brennkraftmaschine kann für den Betrieb mit Benzin und Erdgas geeignet sein. Für eine Lösung zur Erstausrüstung oder auch zur Nachrüstung für einen Betrieb mit Erdgas sind allerdings ein geeigneter Bauraum, insbesondere im Motorraum eines Kraftfahrzeugs, und eine geeignete Befestigung erforderlich. Da für die Brennstoffzuteilung für Erdgas, die zusätzlich zu der Brennstoffeinspritzanlage für Benzin realisiert werden soll, zahlreiche Komponenten erforderlich sind, gestaltet sich die Montage dieser Komponenten und deren Befestigung vergleichsweise aufwändig. Hierbei ist auch eine angepasste Ausgestaltung der Komponenten für die Erdgaseinspritzung an die jeweilige Brennkraftmaschine erforderlich. Gerade bei Nachrüstlösungen ergeben sich hierdurch Qualitätseinbußen.

Aus der US 5,832,905 A ist bereits eine Brennstoffverteilereinrichtung insbesondere für gasförmige Brennstoffe bekannt. Die Verteilereinrichtung weist dabei einen flachen Verteilerblock auf, in den Brennstoffeinspritzventile mit ihren zulaufseitigen Enden eingebracht und somit strömungsmäßig mit dem Verteilerblock verbunden sind. Jeweils drei Brennstoffeinspritzventile sind an ihrem abströmseitigen Ende in einem länglichen Befestigungsblock fixiert, so dass sich die Brennstoffeinspritzventile nicht relativ zueinander bewegen können. Auf der den Brennstoffeinspritzventilen abgewandten Seite ist der Befestigungsblock mit Anschlussstücken versehen, an die Schläuche angeschlossen werden, um den gasförmigen Brennstoff einem Saugrohr zuleiten zu können.

Aus der WO 2010/049966 A1 ist bereits eine Brennstoffverteilereinrichtung insbesondere für gasförmige Brennstoffe (LPG, Methan) bekannt. Diese Brennstoffverteilereinrichtung umfasst einen Verteilerblock, der einen Gaseinlassstutzen sowie mehrere Zugangsöffnungen zu den Brennstoff abgebenden Düsen aufweist. Über Steuereinrichtungen unmittelbar am Verteilerblock werden die Düsendurchlässe gesteuert. Zudem ist an der Längsseite des Verteilerblocks eine elektrische Heizeinrichtung vorgesehen, mit der Restgas im Verteilerblock vor dem Starten der Brennkraftmaschine erwärmt werden kann.

### Offenbarung der Erfindung

Der erfindungsgemäße Brennstoffzuteiler mit den Merkmalen des Anspruchs 1 hat den Vorteil, dass eine verbesserte Ausgestaltung realisiert werden kann, die insbesondere einen kompakten Aufbau hat und eine einfache Montage ermöglicht. Speziell kann ein Brennstoffzuteiler geschaffen werden, bei dem eine einfache Montage und ein breiter Anwendungsbereich bestehen.

Durch die in den Unteransprüchen aufgeführten Maßnahmen sind vorteilhafte Weiterbildungen des im Anspruch 1 angegebenen Brennstoffzuteilers möglich.

Vorteilhaft ist es, dass das Brennstoffverteilerstück zum Verteilen von Erdgas auf die Brennstoffventile dient. Ferner ist es vorteilhaft, dass die Brennstoffventile als Einblasventile ausgestaltet sind. Das Erdgas ist hierbei vorzugsweise als komprimiertes Erdgas in einem geeigneten Gasspeicher gespeichert, beispielsweise bei Drücken von etwa 20 MPa (200 bar). Solch ein komprimiertes Erdgas wird auch als CNG bezeichnet. Der Begriff des Erdgases ist allerdings nicht auf natürliches Erdgas beschränkt, sondern allgemein zu verstehen. Beispielsweise kann das Erdgas auch künstlich durch Kohlevergasung gewonnen werden. Somit sind unter dem Begriff Erdgas auch erdgasähnliche Brennstoffe zu verstehen.

Vorteilhaft ist es, dass ein erstes Anschlussstück und zumindest ein zweites Anschlussstück vorgesehen sind, die mit dem Gehäuse verbunden sind, dass das erste Brennstoffventil an eine Eingangsseite des ersten Anschlussstücks angesetzt ist und dass das zweite Brennstoffventil an eine Eingangsseite des zweiten Anschlussstücks angesetzt ist. Hierbei ist es ferner vorteilhaft, dass die Eingangsseite des ersten Anschlussstücks einen vorzugsweise trichterförmigen Eingangsstutzen aufweist, in den ein abflussseitiges Ende des ersten Brennstoffventils eingefügt ist, und dass die Eingangsseite des zweiten Anschlussstücks einen vorzugsweise trichterförmigen Eingangsstutzen aufweist, in den ein abflussseitiges Ende des zweiten Brennstoffventils eingefügt ist. Hierdurch können die Brennstoffventile an den Eingangsseiten der Anschlussstücke in vorteilhafter Weise zwischen dem Brennstoffverteilerstück und den mit dem Gehäuse verbundenen Anschlussstücken fixiert und positioniert sein.

Vorteilhaft ist es auch, dass an einer Ausgangsseite des ersten Anschlussstücks eine Schlauchtülle ausgestaltet ist und dass an einer Ausgangsseite des zweiten Anschlussstücks eine Schlauchtülle ausgestaltet ist. Über an die Schlauchtüllen anschließbare Schläuche ist somit eine Verbindung mit einem Saugrohr der Brennkraftmaschine möglich. Die Brennstoffzufuhr zum Saugrohr kann hierbei durch flexible Leitungen (Schläuche) erzielt werden, so dass sich ein breiter Anwendungsbereich ergibt. Insbesondere ist eine Anpassung an unterschiedlich ausgestaltete Brennkraftmaschinen, insbesondere mit unterschiedlich angeordneten und beabstandeten Zylindern, möglich. Ferner ermöglicht diese Ausgestaltung, dass der Brennstoffzuteiler weitgehend beliebig in einem Motorraum oder dergleichen montiert werden kann. Speziell muss der Brennstoffzuteiler nicht notwendigerweise direkt an der Brennkraftmaschine beziehungsweise an den Saugrohren montiert werden. Über die Brennstoffventile ist hierbei eine zuverlässige Dosierung des Brennstoffs, insbesondere des komprimierten Erdgases, möglich. Der Brennstoffzuteiler kann insbesondere für Brennkraftmaschinen von Personenkraftwagen, Nutzkraftwagen oder Lastkraftwagen dienen.

Vorteilhaft ist es, dass an dem ersten Ausgang des Brennstoffverteilerstücks eine erste Ventiltasse befestigt ist, dass das erste Brennstoffventil mittels der ersten Ventiltasse mit dem ersten Ausgang des Brennstoffverteilerstücks verbunden ist, dass an dem zweiten Ausgang des Brennstoffverteilerstücks eine zweite Ventiltasse befestigt ist und dass das zweite Brennstoffventil mittels der zweiten Ventiltasse mit dem zweiten Ausgang des Brennstoffverteilerstücks verbunden ist. Hierdurch sind die zwischen dem Brennstoffverteilerstück und dem Gehäuse befestigten Brennstoffventile auf der Seite des Brennstoffverteilerstücks sowohl zuverlässig an das Brennstoffverteilerstück angeschlossen als auch in ihrer Position mechanisch fixiert. Hierdurch kann eine robuste Ausgestaltung des Brennstoffzuteilers realisiert werden.

Vorteilhaft ist es auch, dass das Brennstoffverteilerstück die Öffnung des Gehäuses verschließt. Ferner ist es vorteilhaft, dass das Brennstoffverteilerstück in die Öffnung des Gehäuses eingesetzt ist. Vorteilhaft ist es auch, dass das Brennstoffverteilerstück als Deckel für das Gehäuse ausgestaltet ist. Hierdurch ist ein kompaktes Design möglich, bei dem ein Innenraum des Gehäuses in vorteilhafter Weise gegenüber der Umgebung abgedichtet ist. Hierdurch kann eine Verschmutzung der Brennstoffventile vermieden werden. Außerdem ist hierdurch ein mechanischer Schutz der innerhalb des Gehäuses angeordneten Komponenten möglich, so dass Beschädigungen während der Lagerung, beim Transport, bei der Montage und im Betrieb verhindert sind. Außerdem können an dem Gehäuse in vorteilhafter Weise Befestigungsmöglichkeiten realisiert werden, um den Brennstoffzuteiler im Motorraum oder dergleichen zu befestigen.

Vorteilhaft ist es außerdem, dass das Brennstoffverteilerstück als plattenförmiges Brennstoffverteilerstück ausgestaltet ist. Vorteilhaft ist es hierbei auch, dass mehrere Ausgänge an dem Brennstoffverteilerstück vorgesehen sind, die in einer Anordnung mit zumindest zwei Reihen und zumindest zwei Spalten an einer Seite des Brennstoffverteilerstücks angeordnet sind. Beispielsweise können vier Ausgänge, die für vier Brennstoffventile vorgesehen sind, in einer 2x2-Anordnung an der Seite des Brennstoffverteilerstücks ausgestaltet sein.

In vorteilhafter Weise ist an einer Seite des Brennstoffverteilerstücks ein Anschlussstück angebracht, über das Brennstoff in einen Innenraum des Brennstoffverteilerstücks führbar ist. Ferner ist es vorteilhaft, dass an der Seite des Brennstoffverteilerstücks ein Sensor angebracht ist, der zur Messung eines Drucks und/oder einer Temperatur eines Brennstoffs im Innenraum des Brennstoffverteilerstücks dient. Das Anschlussstück und ein elektrisches Kontaktelement des Sensors sind hierbei von außen zugänglich, so dass ein einfacher Anschluss des Brennstoffzuteilers an einen Brennstoffspeicher, insbesondere Gasspeicher, und an ein Steuergerät oder dergleichen möglich ist. Vorteilhaft ist es auch, dass an einer Außenseite des Gehäuses zumindest ein elektrischer Anschluss vorgesehen ist, der mit zumindest einem elektrischen Anschluss eines Brennstoffventils elektrisch verbunden ist. Besonders vorteilhaft ist es, dass ein kombinierter elektrischer Anschluss für die Brennstoffventile vorgesehen ist, der mit den einzelnen elektrischen Anschlüssen der in dem Gehäuse angeordneten Brennstoffventile elektrisch verbunden ist und dass der kombinierte elektrische Anschluss aus dem Inneren des Gehäuses herausgeführt ist. Hierdurch ist bei der Montage das Verbinden der Brennstoffventile mit einem Steuergerät oder dergleichen erheblich vereinfacht. Insgesamt kann somit der Brennstoffzuteiler so ausgestaltet werden, dass sowohl eine einfache mechanische Befestigung, beispielsweise in einem Motorraum, und zum anderen eine einfache Verbindung mit einem Brennstoffspeicher, insbesondere Gasspeicher, und einem Steuergerät ermöglicht ist.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 ein Ausführungsbeispiel eines Brennstoffzuteilers in einer schematischen, räumlichen Explosionsdarstellung und
Fig. 2 einen Ausschnitt des in Fig. 1 gezeigten Brennstoffzuteilers des Ausführungsbeispiels der Erfindung in einer schematischen Schnittdarstellung.

### Ausführungsformen der Erfindung

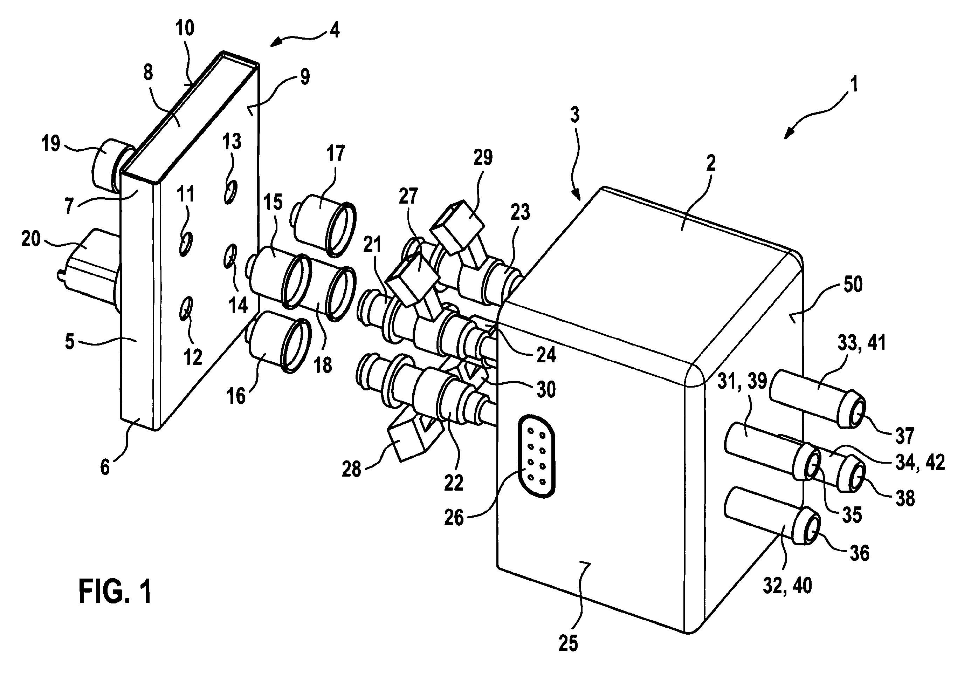

Fig. 1 zeigt ein Ausführungsbeispiel eines Brennstoffzuteilers 1 in einer schematischen, räumlichen Explosionsdarstellung. Der Brennstoffzuteiler 1 kann insbesondere als Injektorblock 1 für Brennstoffeinspritzanlagen von gemischverdichtenden, fremdgezündeten Brennkraftmaschinen dienen. Der Brennstoffzuteiler 1 eignet sich hierbei besonders zur Zuteilung von Erdgas auf mehrere Zylinderräume einer Brennkraftmaschine.

Der Brennstoffzuteiler 1 weist ein Gehäuse 2 mit einer Öffnung 3 auf. Außerdem ist ein Brennstoffverteilerstück 4 vorgesehen, das im zusammengebauten Zustand die Öffnung 3 des Gehäuses 2 verschließt. Hierbei wird das Brennstoffverteilerstück 4 in die Öffnung 3 des Gehäuses 2 eingesetzt. Das Brennstoffverteilerstück 4 weist einen rohrförmigen Grundkörper 5 auf, der ein Vierkantprofil hat. Die beiden Enden 6, 7 des rohrförmigen Grundkörpers 5 sind mit Verschlussscheiben 8 verschlossen, wobei in der Fig. 1 die Verschlussscheibe 8 dargestellt und gekennzeichnet ist. Die Verschlussscheibe 8 kann dabei durch Löten mit dem rohrförmigen Grundkörper 5 verbunden sein. Der rohrförmige Grundkörper 5 und die Verschlussscheiben 8 können aus einem metallischen Werkstoff, insbesondere Edelstahl, gebildet sein.

Das Brennstoffverteilerstück 4 weist voneinander abgewandte Seite 9, 10 auf. Die Seite 9 ist eine Innenseite 9 beziehungsweise Unterseite 9 des plattenförmigen Brennstoffverteilerstücks 4. Die Seite 10 ist eine Außenseite 10 beziehungsweise Oberseite 10 des plattenförmigen Brennstoffverteilerstücks 4. An der Innenseite 9 des Brennstoffverteilerstücks 4 sind ein erster Ausgang 11, ein zweiter Ausgang 12 und weitere Ausgänge 13, 14 des Brennstoffverteilerstücks 4 ausgestaltet. Die Ausgänge 11 bis 14 sind hierbei in einer 2x2-Anordnung an der Innenseite 9 angeordnet. Diese Anordnung hat zwei Reihen und zwei Spalten. Hierdurch ergibt sich eine kompakte Ausgestaltung.

An den Ausgängen 11 bis 14 sind Ventiltassen 15, 16, 17, 18 befestigt. Entsprechend der Anordnung der Ausgänge 11 bis 14 sind auch die Ventiltassen 15 bis 18 angeordnet, in diesem Ausführungsbeispiel in einer Anordnung mit zwei Reihen und zwei Spalten.

An der Außenseite 10 des Brennstoffverteilerstücks 4 sind ein Anschlussstück 19 und ein Sensor 20 mit einem elektrischen Kontaktelement angebracht. Über das Anschlussstück 19 ist eine Verbindung des Brennstoffzuteilers 1 mit einem Gasspeicher möglich. Hierdurch kann beispielsweise komprimiertes Erdgas in einen Innenraum des plattenförmigen Brennstoffverteilerstücks 4 geführt werden. Der Sensor 20 dient zum Messen eines Drucks und einer Temperatur des sich im Innenraum des Brennstoffverteilerstücks 4 befindenden Erdgases. Der Sensor 20 kann an dem elektrischen Kontaktelement mit einer geeigneten elektrischen Leitung verbunden werden, um eine Verbindung mit einem Steuergerät herzustellen.

Der Brennstoffzuteiler 1 weist ein erstes Brennstoffventil 21, ein zweites Brennstoffventil 22 und weitere Brennstoffventile 23, 24 auf. Die Brennstoffventile 21 bis 24 sind vorzugsweise als Einblasventile 21 bis 24 ausgestaltet und für Erdgas geeignet. Im zusammengesetzten Zustand sind die Brennstoffventile 21 bis 24 über die jeweils zugeordnete Ventiltasse 15 bis 18 mit den Ausgängen 11 bis 14 des Brennstoffverteilerstücks 4 verbunden. Beispielsweise ist das erste Brennstoffventil 21 über die Ventiltasse 15 mit dem Ausgang 11 des Brennstoffverteilerstücks 4 verbunden.

An einer Außenseite 25 des Gehäuses 2 ist ein kombinierter elektrischer Anschluss 26 vorgesehen. Die einzelnen Brennstoffventile 21 bis 24 weisen jeweils einen elektrischen Anschluss 27 bis 30 auf. Über geeignete, nicht dargestellte elektrische Verbindungskabel sind die elektrischen Anschlüsse 27 bis 30 der Brennstoffventile 21 bis 24 von innen mit dem kombinierten elektrischen Anschluss 26 verbunden. Die gesamte elektrische Kontaktierung der Brennstoffventile 21 bis 24 mit dem kombinierten elektrischen Anschluss 26 wird hierdurch innerhalb des Gehäuses 2 untergebracht. Über den elektrischen Anschluss 26 ist dann in einfacher Weise eine elektrische Verbindung mit dem Steuergerät realisierbar. Speziell kann dies über ein einziges Mehrfachkabel erfolgen, wodurch die Montage erleichtert und Montagefehler vermieden sind.

An dem Gehäuse 2 sind ein erstes Anschlussstück 31, ein zweites Anschlussstück 32 und weitere Anschlussstücke 33, 34 angebracht. Hierbei sind an den Ausgangsseiten 35, 36, 37, 38 der Anschlussstücke 31 bis 34 Schlauchtüllen 39, 40, 41, 42 ausgestaltet. An die Schlauchtüllen 39 bis 42 können Schläuche zum Verbinden des Brennstoffzuteilers 1 mit den Saugrohren der Brennkraftmaschine angeschlossen werden. Die Brennstoffventile 21 bis 24 sind den Anschlussstücken 31 bis 34 zugeordnet. Beispielsweise ist das erste Brennstoffventil 21 dem Anschlussstück 31 und somit der Schlauchtülle 39 zugeordnet. Das zweite Brennstoffventil 22 ist dem Anschlussstück 32 und somit der Schlauchtülle 40 zugeordnet.

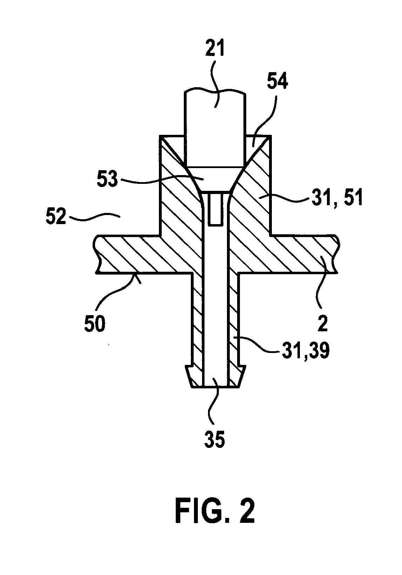

Die Ausgestaltung des Brennstoffzuteilers 1 ist im Folgenden auch unter Bezugnahme auf die Fig. 2 beschrieben.

Fig. 2 zeigt einen Auszug aus dem Brennstoffzuteiler 1 in einer schematischen Schnittdarstellung. Hierbei ist ein Teil des Gehäuses 2 im Bereich der Unterseite 50 mit dem Anschlussstück 31 dargestellt. Das Anschlussstück 31 weist einen trichterförmigen Eingangsstutzen 51 auf, der sich in den Innenraum 52 des Gehäuses 2 erstreckt. Von der Seite 50 aus erstreckt sich die Schlauchtülle 39 des Anschlussstücks 31 senkrecht zu der Seite 50. In den trichterförmigen Eingangsstutzen 51 ist ein abflussseitiges Ende 53 des ersten Brennstoffventils 21 eingefügt. Im zusammengesetzten Zustand wird das erste Brennstoffventil 21 daher zwischen dem Gehäuse 2 und dem Brennstoffverteilerstück 4 gehalten. Hierbei ist das Brennstoffventil 21 einerseits an dem trichterförmigen Eingangsstutzen 51 und andererseits an der Ventiltasse 15 fixiert. Entsprechend sind auch die anderen Brennstoffventile 22 bis 24 zwischen dem Gehäuse 2 und dem Brennstoffverteilerstück 4 angeordnet und fixiert. Somit ist das abflussseitige Ende 53 des Brennstoffventils 21 an eine Eingangsseite 54 des Anschlussstücks 31 angesetzt. Eine entsprechende Ausgestaltung besteht auch für die anderen Brennstoffventile 22 bis 24.

Im zusammengesetzten Zustand dient das plattenförmige Brennstoffverteilerstück 4 als Deckel 4 für das Gehäuse 2. Somit ist das Gehäuse 2 zu allen Seiten geschlossen. Hierdurch wird das Eindringen von Schmutz oder dergleichen in den Innenraum 52 des Gehäuses 2 vermieden. Außerdem ist ein mechanischer Schutz der im Innenraum 52 des Gehäuses 2 angeordneten Komponenten, insbesondere der Brennstoffventile 21 bis 24 und deren elektrische Verkabelung gewährleistet. Diese Anordnung, bei der die Brennstoffventile 21 bis 24 innerhalb des Gehäuses 2 angeordnet sind, ermöglicht somit eine robuste Ausgestaltung des Brennstoffzuteilers 1. Weitere Vorteile sind, dass sich eine große Freiheit bei der Platzierung des Brennstoffzuteilers 1 im Motorraum und dessen Befestigung ergibt. Dies wird auch durch das kompakte Design ermöglicht. Außerdem kann die Gestaltung im Saugrohrbereich auch bei engen Bauräumen vereinfacht werden. Dies ist besonders bei einem Betrieb mit Erdgas und Benzin von Vorteil. Ferner ergibt sich eine große, universelle Anwendbarkeit. Ein weiterer Vorteil ist, dass sich auch die Brennstoffventile 21 bis 24 für einen großen Anwendungsbereich eignen und somit Änderungen oder Anpassungen in der Regel nicht notwendig sind. Der Brennstoffzuteiler 1 ist somit als kompakter Brennstoffzuteiler 1 ausgestaltet, an dem alle notwendigen Anschlüsse realisiert und in einfacher Weise genutzt werden können. Hierdurch vereinfacht sich die Montage, insbesondere beim Nachrüsten.

Die Erfindung ist nicht auf die beschriebenen Ausführungsbeispiele beschränkt.

## Patentansprüche

1. Brennstoffzuteiler (1), insbesondere Injektorblock für Brennstoffeinspritzanlagen von gemischverdichtenden, fremdgezündeten Brennkraftmaschinen, mit einem Gehäuse (2), einem Brennstoffverteilerstück (4), das an einer Öffnung (3) des Gehäuses (2) angeordnet ist, einem ersten Brennstoffventil (21) und zumindest einem zweiten Brennstoffventil (22), wobei das erste Brennstoffventil (21) zumindest mittelbar mit einem ersten Ausgang (11) des Brennstoffverteilerstücks (4) verbunden ist, wobei das zweite Brennstoffventil (22) zumindest mittelbar mit einem zweiten Ausgang (12) des Brennstoffverteilerstücks (4) verbunden ist und wobei das erste Brennstoffventil (21) und das zweite Brennstoffventil (22) innerhalb des Gehäuses (2) angeordnet sind.

2. Brennstoffzuteiler nach Anspruch 1,
**dadurch gekennzeichnet,**
**dass** das Brennstoffverteilerstück (4) zum Verteilen von Erdgas auf die Brennstoffventile (21, 22) dient und/oder dass die Brennstoffventile (21, 22) als Einblasventile (21, 22) ausgestaltet sind.

3. Brennstoffzuteiler nach Anspruch 1 oder 2,
**dadurch gekennzeichnet,**
**dass** ein erstes Anschlussstück (31) und zumindest ein zweites Anschlussstück (32) vorgesehen sind, die zumindest mittelbar mit dem Gehäuse (2) verbunden sind, dass das erste Brennstoffventil (21) an eine Eingangsseite (54) des ersten Anschlussstücks (31) angesetzt ist und dass das zweite Brennstoffventil (22) an eine Eingangsseite des zweiten Anschlussstücks (32) angesetzt ist.

4. Brennstoffzuteiler nach Anspruch 3,
**dadurch gekennzeichnet,**
**dass** die Eingangsseite (54) des ersten Anschlussstücks (31) einen vorzugsweise zumindest näherungsweise trichterförmigen Eingangsstutzen (51) aufweist, in den ein abflussseitiges Ende (53) des ersten Brennstoffventils (21) eingefügt ist, und dass die Eingangsseite des zweiten Anschlussstücks (32) einen vorzugsweise zumindest näherungsweise trichterförmigen Eingangsstutzen aufweist, in den ein abflussseitiges Ende des zweiten Brennstoffventils (22) eingefügt ist.

5. Brennstoffzuteiler nach Anspruch 3 oder 4,
**dadurch gekennzeichnet,**
**dass** an einer Ausgangsseite (35) des ersten Anschlussstücks (31) eine Schlauchtülle (39) ausgestaltet ist und dass an einer Ausgangsseite (36) des zweiten Anschlussstücks (32) eine Schlauchtülle (40) ausgestaltet ist.

6. Brennstoffzuteiler nach einem der Ansprüche 1 bis 5,
**dadurch gekennzeichnet,**
**dass** an dem ersten Ausgang (11) des Brennstoffverteilerstücks (4) eine erste Ventiltasse (15) befestigt ist, dass das erste Brennstoffventil (21) mittels der ersten Ventiltasse (15) mit dem ersten Ausgang (11) des Brennstoffverteilerstücks (4) verbunden ist, dass an dem zweiten Ausgang (12) des Brennstoffverteilerstücks (4) eine zweite Ventiltasse (16) befestigt ist und dass das zweite Brennstoffventil (22) mittels der zweiten Ventiltasse (16) mit dem zweiten Ausgang (12) des Brennstoffverteilerstücks (4) verbunden ist.

7. Brennstoffzuteiler nach einem der Ansprüche 1 bis 6,
**dadurch gekennzeichnet,**
**dass** das Brennstoffverteilerstück (4) die Öffnung (3) des Gehäuses (2) verschließt und/oder dass das Brennstoffverteilerstück (4) in die Öffnung (3) des Gehäuses (2) eingesetzt ist und/oder dass das Brennstoffverteilerstück (4) als Deckel (4) für das Gehäuse (2) ausgestaltet ist.

8. Brennstoffzuteiler nach einem der Ansprüche 1 bis 7,
**dadurch gekennzeichnet,**
**dass** das Brennstoffverteilerstück (4) als plattenförmiges Brennstoffverteilerstück (4) ausgestaltet ist
und/oder
**dass** mehrere Brennstoffventile (21 - 24) vorgesehen sind und dass mehrere Ausgänge (11 - 14) an dem Brennstoffverteilerstück (4) vorgesehen sind, die in einer Anordnung mit zumindest zwei Reihen und zumindest zwei Spalten an einer Seite (9) des Brennstoffverteilerstücks (4) angeordnet sind.

9. Brennstoffzuteiler nach einem der Ansprüche 1 bis 8,
**dadurch gekennzeichnet,**
**dass** an einer Seite (10) des Brennstoffverteilerstücks (4) ein Anschlussstück (19) angebracht ist, über das Brennstoff in einen Innenraum des Brennstoffverteilerstücks (4) führbar ist, und/oder dass an der Seite (10) des Brennstoffverteilerstücks (4) ein Sensor (20) angebracht ist, der zur Messung eines Drucks und/oder einer Temperatur eines Brennstoffs im Innenraum des Brennstoffverteilerstücks (4) dient.

10. Brennstoffzuteiler nach einem der Ansprüche 1 bis 9,
**dadurch gekennzeichnet,**
**dass** an einer Außenseite (25) des Gehäuses (2) zumindest ein elektrischer Anschluss (26) vorgesehen ist, der mit zumindest einem elektrischen Anschluss (27 - 30) eines Brennstoffventils (21 - 24) elektrisch verbunden ist
und/oder
**dass** ein kombinierter elektrischer Anschluss (26) für die Brennstoffventile (21 - 24) vorgesehen ist, der mit den einzelnen elektrischen Anschlüssen (27 - 30) der in dem Gehäuse (2) angeordneten Brennstoffventile (21 - 24) elektrisch verbunden ist, und dass der kombinierte elektrische Anschluss (26) aus dem Inneren (52) des Gehäuses (2) herausgeführt ist.

## Claims

1. Fuel distributor (1), in particular injector block for fuel injection systems of mixture-compressing, spark-ignition internal combustion engines, having a housing (2), a fuel manifold (4) which is arranged at an opening (3) of the housing (2), a first fuel valve (21) and at least one second fuel valve (22), the first fuel valve (21) being connected at least indirectly to a first outlet (11) of the fuel manifold (4), the second fuel valve (22) being connected at least indirectly to a second outlet (12) of the fuel manifold (4), and the first fuel valve (21) and the second fuel valve (22) being arranged inside the housing (2).

2. Fuel distributor according to Claim 1, **characterized in that** the fuel manifold (4) serves to distribute natural gas to the fuel valves (21, 22), and/or **in that** the fuel valves (21, 22) are configured as injector valves (21, 22).

3. Fuel distributor according to Claim 1 or 2, **characterized in that** a first connector piece (31) and at least one second connector piece (32) are provided which are connected at least indirectly to the housing (2), **in that** the first fuel valve (21) is attached to an inlet side (54) of the first connector piece (31), and **in that** the second fuel valve (22) is attached to an inlet side of the second connector piece (32).

4. Fuel distributor according to Claim 3, **characterized in that** the inlet side (54) of the first connector piece (31) has a preferably at least approximately funnel-shaped inlet stub (51), into which an outflow-side end (53) of the first fuel valve (21) is inserted, and **in that** the inlet side of the second connector piece (32) has a preferably at least approximately funnel-shaped inlet stub, into which an outflow-side end of the second fuel valve (22) is inserted.

5. Fuel distributor according to Claim 3 or 4, **characterized in that** a hose nozzle (39) is configured on an outlet side (35) of the first connector piece (31), and **in that** a hose nozzle (40) is configured on an outlet side (36) of the second connector piece (32).

6. Fuel distributor according to one of Claims 1 to 5, **characterized in that** a first valve cup (15) is fastened to the first outlet (11) of the fuel manifold (4), **in that** the first fuel valve (21) is connected by means of the first valve cup (15) to the first outlet (11) of the fuel manifold (4), **in that** a second valve cup (16) is fastened to the second outlet (12) of the fuel manifold (4), and **in that** the second fuel valve (22) is connected by means of the second valve cup (16) to the second outlet (12) of the fuel manifold (4).

7. Fuel distributor according to one of Claims 1 to 6, **characterized in that** the fuel manifold (4) closes the opening (3) of the housing (2), and/or **in that** the fuel manifold (4) is inserted into the opening (3) of the housing (2), and/or **in that** the fuel manifold (4) is configured as a cover (4) for the housing (2).

8. Fuel distributor according to one of Claims 1 to 7, **characterized in that** the fuel manifold (4) is configured as a plate-shaped fuel manifold (4), and/or in that a plurality of fuel valves (21-24) are provided, and **in that** a plurality of outlets (11-14) are provided on the fuel manifold (4), which outlets (11-14) are arranged in an arrangement with at least two rows and at least two columns on a side (9) of the fuel manifold (4).

9. Fuel distributor according to one of Claims 1 to 8, **characterized in that** a connector piece (19) is attached on a side (10) of the fuel manifold (4), via which connector piece (19) fuel can be routed into an interior of the fuel manifold (4), and/or **in that** a sensor (20) is attached on the side (10) of the fuel manifold (4), which sensor (20) serves to measure a pressure and/or a temperature of a fuel in the interior of the fuel manifold (4).

10. Fuel distributor according to one of Claims 1 to 9, **characterized in that** at least one electrical connector (26) is provided on an outer side (25) of the housing (2), which electrical connector (26) is connected electrically to at least one electrical connector (27-30) of a fuel valve (21-24), and/or **in that** a combined electrical connector (26) is provided for the fuel valves (21-24), which combined electrical connector (26) is connected electrically to the individual electrical connectors (27-30) of the fuel valves (21-24) which are arranged in the housing (2), and **in that** the combined electrical connector (26) is guided out of the interior (52) of the housing (2).

## Revendications

1. Distributeur de carburant (1), notamment bloc d'injection pour des installations d'injection de carburant de moteurs à combustion interne à allumage commandé et compression du mélange, comprenant un boîtier (2), une pièce de distribution de carburant (4) qui est disposée au niveau d'une ouverture (3) du boîtier (2), une première soupape de carburant (21) et au moins une deuxième soupape de carburant (22), la première soupape de carburant (21) étant connectée au moins de manière indirecte à une première sortie (11) de la pièce de distribution de carburant (4), la deuxième soupape de carburant (22) étant connectée au moins de manière indirecte à une deuxième sortie (12) de la pièce de distribution de carburant (4) et la première soupape de carburant (21) et la deuxième soupape de carburant (22) étant disposées à l'intérieur du boîtier (2).

2. Distributeur de carburant selon la revendication 1,
**caractérisé en ce que**
la pièce de distribution de carburant (4) sert à distribuer du gaz naturel aux soupapes de combustion (21, 22) et/ou **en ce que** les soupapes de combustion (21, 22) sont réalisées sous forme de soupapes de soufflage (21, 22).

3. Distributeur de carburant selon la revendication 1 ou 2,
**caractérisé en ce**
**qu'**une première pièce de raccordement (31) et au moins une deuxième pièce de raccordement (32) sont prévues, lesquelles sont connectées au moins de manière indirecte au boîtier (2), en ce que la première soupape de carburant (21) est placée au niveau d'un côté d'entrée (54) de la première pièce de raccordement (31) et en ce que la deuxième soupape de carburant (22) est placée au niveau d'un côté d'entrée de la deuxième pièce de raccordement (32).

4. Distributeur de carburant selon la revendication 3,
**caractérisé en ce que**
le côté d'entrée (54) de la première pièce de raccordement (31) présente une tubulure d'entrée (51) de préférence au moins approximativement en forme d'entonnoir, dans laquelle est introduite une extrémité côté écoulement (53) de la première soupape de carburant (21), et **en ce que** le côté d'entrée de la deuxième pièce de raccordement (32) présente une tubulure d'entrée de préférence au moins approximativement en forme d'entonnoir, dans laquelle est introduite une extrémité côté écoulement de la deuxième soupape de carburant (22).

5. Distributeur de carburant selon la revendication 3 ou 4,
**caractérisé en ce**
**qu'**au niveau d'un côté de sortie (35) de la première pièce de raccordement (31) est réalisée une douille tubulaire (39) et en ce qu'au niveau d'un côté de sortie (36) de la deuxième pièce de raccordement (32) est réalisée une douille tubulaire (40).

6. Distributeur de carburant selon l'une quelconque des revendications 1 à 5,
**caractérisé en ce**
**qu'**au niveau de la première sortie (11) de la pièce de distribution de carburant (4) est fixée une première coupelle de soupape (15), en ce que la première soupape de carburant (21) est connectée au moyen de la première coupelle de soupape (15) à la première sortie (11) de la pièce de distribution de carburant (4), en ce qu'au niveau de la deuxième sortie (12) de la pièce de distribution de carburant (4) est fixée une deuxième coupelle de soupape (16), et en ce que la deuxième soupape de carburant (22) est connectée au moyen de la deuxième coupelle de soupape (16) à la deuxième sortie (12) de la pièce de distribution de carburant (4).

7. Distributeur de carburant selon l'une quelconque des revendications 1 à 6,
**caractérisé en ce que**
la pièce de distribution de carburant (4) ferme l'ouverture (3) du boîtier (2) et/ou **en ce que** la pièce de distribution de carburant (4) est insérée dans l'ouverture (3) du boîtier (2) et/ou **en ce que** la pièce de distribution de carburant (4) est configurée sous forme de couvercle (4) pour le boîtier (2).

8. Distributeur de carburant selon l'une quelconque des revendications 1 à 7,
**caractérisé en ce que**
la pièce de distribution de carburant (4) est réalisée sous forme de pièce de distribution de carburant en forme de plaque (4)
et/ou
**en ce que** plusieurs soupapes de carburant (21 - 24) sont prévues et **en ce que** plusieurs sorties (11 - 14) sont prévues au niveau de la pièce de distribution de carburant (4), lesquelles sont disposées suivant un agencement avec au moins deux rangées et au moins deux colonnes au niveau d'un côté (9) de la pièce de distribution de carburant (4).

9. Distributeur de carburant selon l'une quelconque des revendications 1 à 8,
**caractérisé en ce**
**qu'**au niveau d'un côté (10) de la pièce de distribution de carburant (4) est montée une pièce de raccordement (19), par le biais de laquelle du carburant peut être guidé dans un espace interne de la pièce de distribution de carburant (4), et/ou en ce qu'au niveau du côté (10) de la pièce de distribution de carburant (4) est monté un capteur (20) qui sert à mesurer une pression et/ou une température d'un carburant dans l'espace interne de la pièce de distribution de carburant (4).

10. Distributeur de carburant selon l'une quelconque des revendications 1 à 9,
**caractérisé en ce**
**qu'**au niveau d'un côté extérieur (25) du boîtier (2) est prévu au moins un raccordement électrique (26) qui est connecté électriquement à au moins un raccordement électrique (27 - 30) d'une soupape de carburant (21 - 24)
et/ou
en ce qu'un raccordement électrique combiné (26) pour les soupapes de carburant (21 - 24) est prévu, lequel est connecté électriquement aux raccordements électriques individuels (27 - 30) des soupapes de carburant (21 - 24) disposées dans le boîtier (2), et en ce que le raccordement électrique combiné (26) est guidé hors de l'intérieur (52) du boîtier (2).
